# EUROPEAN PATENT SPECIFICATION

(11) **EP 3 290 990 B1**
(45) Date of publication and mention of the grant of the patent: **15.07.2020**
(21) Application number: 16786310.9
(22) Date of filing: 14.04.2016
(51) Int. Cl.: G02B 27/01, B60K 35/00, H04N 5/64

(54) **HEAD-UP DISPLAY DEVICE**
HEAD-UP-ANZEIGEVORRICHTUNG
DISPOSITIF D'AFFICHAGE TÊTE HAUTE

(30) Priority: 28.04.2015 JP 2015091248
(43) Date of publication of application: 07.03.2018
(73) Proprietor: Nippon Seiki Co., Ltd., Nagaoka-shi, Niigata 940-8580 (JP)
(72) Inventor: YAMAZOE,Takashi, Nagaoka Niigata (JP)
(74) Representative: Carpmaels & Ransford LLP
(86) International application number: PCT/JP2016/061965
(87) International publication number: WO 2016/175033

(56) References cited:
- JP-A- 2011 180 541
- JP-A- 2011 180 541
- JP-A- 2014 010 321
- JP-A- 2014 010 321
- JP-A- 2015 059 995
- JP-A- 2015 059 995

## Description

### TECHNICAL FIELD

The present invention relates to a head-up display device using a transmission-type screen.

### BACKGROUND ART

In a head-up display (HUD) device using a transmission-type screen, external light such as sunlight enters from the outside of a windshield and reflects on an emission surface of the transmission-type screen, and the external light reflecting on the emission surface (hereinafter also referred to as reflected external light) may overlap a display light and reduce visibility of a display image (virtual image) causing washout. On the other hand, Patent Literature 1 discloses a method of reflecting external light reaching an emission surface of a transmission-type screen along an optical axis of display light in a direction different from a direction along the optical axis of the display light, by disposing the transmission-type screen with a normal line of the transmission-type screen inclined by a certain angle with respect to the optical axis of the display light.

JP 2015 059995 A relates to an image projection unit of an image display device which includes a first light source, a second light source and a third light source which emit light for generating image display light based on an image signal. A first heat sink is provided outside a housing and is connected to the first light source. A second heat sink is provided outside the housing and is connected to the second light source. A third heat sink is provided outside the housing and is connected to the third light source. A distance from the first heat sink to the second heat sink and a distance from the first heat sink to the third heat sink are longer than a distance from the second heat sink to the third heat sink.

### CITATION LIST

### PATENT LITERATURE

Patent Literature 1: Japanese Unexamined Patent Application Publication No. 2014-149405

### SUMMARY OF THE INVENTION

### PROBLEMS TO BE SOLVED BY THE INVENTION

Here, when the HUD device includes a reflecting mirror that reflects light from the transmission-type screen as an optical member constituting a HUD optical system, in order to prevent washout due to reflected external light, it is desirable to prevent the reflected external light from directing to the reflecting mirror. However, in the method of inclining only the transmission-type screen disclosed in Patent Literature 1, it is necessary to greatly increase an inclination angle of the transmission-type screen to prevent the reflected external light from directing to the reflecting mirror. This arises a problem of increased distortion of the display image. According to optical simulation conducted by the inventors of the present application, it was found that the distortion of a display image is minimized when the transmission-type screen is slightly inclined with respect to the optical axis of the display light, and increases as the inclination angle is increased from the angle at which the distortion is minimized.

In addition, in the HUD device, a windshield of a vehicle is one of optical members constituting the HUD optical system, but on the other hand, it is required to satisfy styling of a vehicle and wiping request of a wiper as an exterior member of a vehicle, and as a result, it often becomes a shape apart from the optical ideal. The HUD optical system is designed to correct distortion of a display image caused by a windshield of such an optically undesirable shape. On the other hand, in recent years, the HUD device has been advanced in a wide angle of view and distant display. With a wide angle of view, an area of a windshield used as an optical member becomes wider than before, and the amount of change in curvature increases. For this reason, it has been difficult to correct distortion of a display image by designing the HUD optical system. In addition, when the angle of view increases, a viewer can easily perceive the distortion of a display image. Further, by the distant display, it is also necessary to increase a magnification ratio of the HUD optical system, and accordingly the distortion of a display image tends to increase. Further, it is assumed that the HUD device with a wider angle of view and distant display performs AR (Augmented Reality) display, but in the AR display, it is necessary to superimpose a display image with actual scenery. Thus, as compared with the case where vehicle information such as a vehicle speed or the like has been displayed, distortion of a display image is more likely to be perceived by a viewer. Furthermore, there is a method of distortion correction called warping, in which an image projected on a transmission-type screen is pre-distorted in an opposite direction by the amount distorted by the HUD optical system after the transmission-type screen. However, the warping corrects distortion of a display image viewed from a specific viewpoint, and when a viewer's point of view moves vertically and horizontally, the distortion is not corrected, and it cannot be an essential solution to the distortion.

From the above-described circumstances, it is desirable to incline a transmission-type screen to be a position ideal for optical design as much as possible.

There is also a method of applying reflection reduction treatment such as AR (Anti-Reflective) coating on an emission surface of a transmission-type screen to reduce the intensity of reflected external light. However, in the case where incident external light is sunlight, the intensity of the external light incident on the transmission-type screen is high, and it is insufficient as a measure against the washout.

The present invention has been made in view of the above problems. Accordingly, it is an object of the present invention to provide a head-up display device capable of reducing distortion of a display image and preventing degradation of visibility due to reflected external light from a transmission-type screen.

### SOLUTION TO PROBLEM

In order to achieve the above object, a head-up display device of the present invention comprises:
a display light emitting part for emitting display light that shows a display image, a transmission-type screen, including a light receiving surface that receives the display light and an emission surface that emits the display light, and a reflecting mirror that reflects the display light from the transmission-type screen,
wherein the transmission-type screen includes a concave curved portion on one end side of the emission surface, and the curved portion reflects external light reaching from the reflecting mirror in a direction different from that of the reflecting mirror.

### EFFECT OF THE INVENTION

According to the present invention, it is possible to reduce distortion of a display image and to prevent deterioration of visibility due to reflected external light from a transmission-type screen.

### BRIEF DESCRIPTION OF THE DRAWINGS

FIG. 1 is a schematic view of a HUD device in an embodiment of the present invention.
FIG. 2 is a schematic sectional view of the HUD device.
FIG. 3 is a side view showing a transmission-type screen of the HUD device.
FIG. 4 is a side view showing a modified example of the transmission-type screen of the HUD device.
FIG. 5 is a view showing a display image displayed on the transmission-type screen shown in FIG. 3.

### MODE FOR CARRYING OUT THE INVENTION

A configuration, operation and effects of a HUD device according to an embodiment of the present invention will be specifically described below.

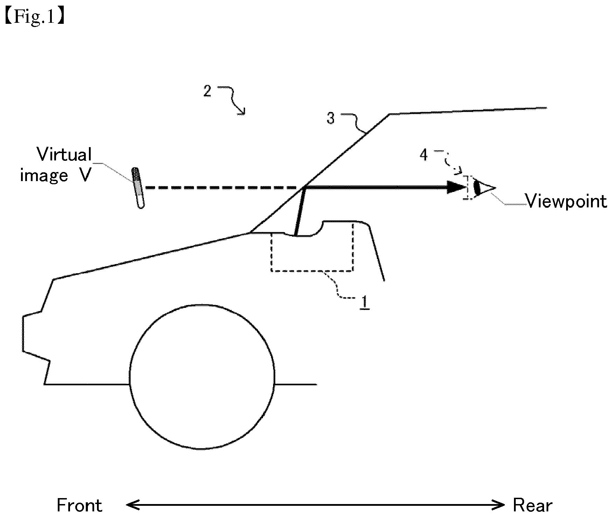

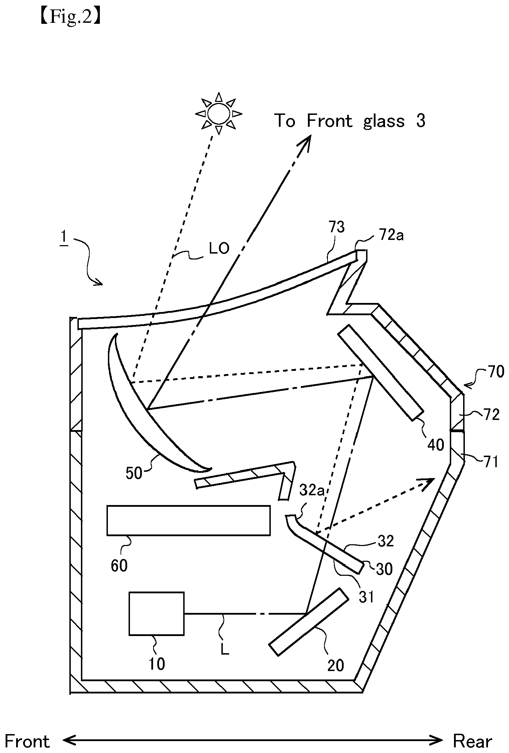

As shown in FIG. 1, the HUD device 1 is provided in a dashboard of a vehicle 2 and reflects a display light L (see FIG. 2) representing a generated display image on a windshield 3 to allow a driver (viewer) to view a virtual image V of the display image representing vehicle information. The driver visually recognizes the display image as a virtual image V in Eyebox 4 that is a range (viewing area) where the display image is visible as a virtual image V. Eyebox 4 is an area defined as a range where the virtual image V is properly visible. It should be noted that the virtual image V in FIG. 1 is schematically shown in order to facilitate a sensory understanding. The same applies to the display light L in FIG. 2. In the following description, each part constituting the HUD device 1 will be explained as appropriate, assuming that an upward direction is "up", a downward direction as "down", a forward direction as "front", and a rearward direction as "rear" (see arrows at both ends in FIGS. 1 and 2) as seen from a driver viewing a display image displayed by the HUD device 1.

As shown in FIG. 2, the HUD device 1 shown in FIG. 1 includes a projector 10, a first reflecting mirror 20, a transmission-type screen 30, a second reflecting mirror 40, a concave mirror 50, a circuit board 60, and a housing 70.

The projector 10 is an example of a display light emitting part of the present invention which emits the display light L, indicating a display image under the control of a control unit. The projector comprises, for example, an LED or laser or the like for emitting illumination light, a display device composed of a transmissive display such as a TFT liquid crystal display, a reflective display such as a DMD (Digital Mirror Device) or LCOS (Liquid Crystal On Silicon) for receiving illumination light from a light source to display a display image on a display surface, and a projection lens for emitting the display light L indicating a display image magnified from a display image of the display device.

The first reflecting mirror 20 is, for example, a plane mirror and reflects the display light L emitted from the projector 10 toward the transmission-type screen 30.

The transmission-type screen 30 receives the display light L generated by the projector 10 on the light receiving surface 31, and transmits, diffuses and emits the display light L as diffused light to the second reflecting mirror 40 from the emission surface 32. The transmission-type screen 30 is made of a transparent resin such as polycarbonate (PC) or polyethylene terephthalate (PET), and is provided with a grain or microlens on the surface or dispersed diffusion beads inside to obtain a diffusion effect, and is formed in a substantially rectangular shape when viewed from the front. Further, the transmission-type screen 30 is formed and arranged to reflect the external light LO such as sunlight incident into the HUD device 1 in a direction different from that of the second reflecting mirror 40. Specific shapes and arrangements will be described in detail later.

The second reflecting mirror 40 is, for example, a plane mirror and reflects the display light L emitted from the transmission-type screen 30 toward the concave mirror 50. The second reflecting mirror 40 may be a convex mirror or a concave mirror.

The concave mirror 50 is formed by forming a reflective film on the surface of a concave base made of, for example, a synthetic resin material by means such as vapor deposition, and magnifies the display light L emitted from the transmission-type screen 30 and emits it in the direction of the windshield 3.

The circuit board 60 is a printed circuit board, in which a microcomputer including a CPU (Central Processing Unit) and a storage unit such as a ROM (Read Only Memory), and a control unit (not shown) comprising a graphic display controller (GDC) or the like, are mounted on a plate-like substrate made of resin or the like including a glass fiber. The circuit board 60 and the projector 10 are conductively connected by a connecting member (not shown) such as an FPC (Flexible Printed Circuit) and a connector. The control unit acquires vehicle state information such as a vehicle speed and an engine speed transmitted from an external device (not shown) such as a vehicle ECU (Electronic Control Unit) via a communication line, and drives the projector 10 according to the acquired information (that is, causes the projector 10 to display a predetermined display image).

The housing 70 accommodates each member constituting the HUD device 1, and is provided in a hard resin or the like enclosure. The housing 70 includes a lower case 71 and an upper case 72. Above the upper case 72, there is provided an opening 72 a having a size capable of emitting the display light L reflected by the concave mirror 50 toward the windshield 3, and a cover glass 73 made of transparent resin is attached to the opening 72 a.

The above is a configuration of the HUD device 1 according to the present embodiment, and the display light L emitted from the HUD device 1 is projected on the windshield 3 of the vehicle 2 and incident on the eyes of a driver to allow the driver to visually recognize the virtual image V. In addition, in the HUD device 1, the transmission-type screen 30 has a characteristic configuration and suppresses degradation (washout) of visibility due to external light LO such as sunlight incident from the outside of the windshield 3. Hereinafter, the specific configuration and the like of the transmission-type screen 30 will be described in detail.

### (Transmission-type screen 30)

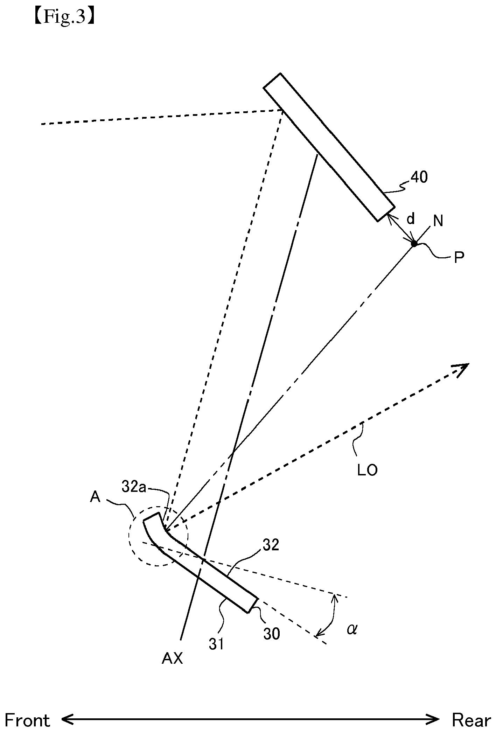

As shown in FIG. 3, the transmission-type screen 30 of the present embodiment is disposed to be inclined by a predetermined angle α with respect to an optical axis AX of display light L. This angle α is an angle at which distortion of a virtual image V is minimized (hereinafter also referred to as a minimum distortion angle) in optical design. For example, a minimum distortion angle is 5 to 13 ° in a HUD 1 with a wide angle of view and a distant display in which a field angle of a virtual image V is 10 ° or more in a horizontal direction and 5 ° or more in a vertical direction, and a display distance is about 5 to 10 m. As described above, when the transmission-type screen 30 is inclined with a minimum distortion angle, it is impossible to reflect all of the external light LO incident on the emission surface 32 of the transmission-type screen 30 from the second reflecting mirror 40 in a direction different from that of the second reflecting mirror 40. In detail, the external light LO that has reflected most of the light from the rear end side of the emission surface 32 is directed in a direction different from that of the second reflecting mirror 40. However, unless any measure is taken, the external light LO that has reflected a part of the front-end side (one side of a rectangle) surrounded by the circle A in FIG. 3 is directed toward the second reflecting mirror 40, causing degradation of the visibility of the virtual image V. Standing on this viewpoint, the inventor of the present application reached the idea of making the curved portion 32 a to incline only a part on the frontend side of the emission surface 32 more than the minimum distortion angle.

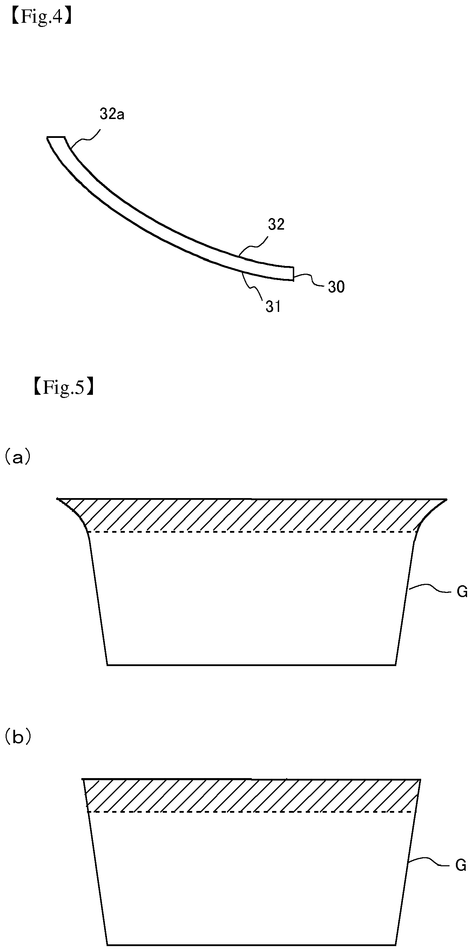

The curved surface of the curved portion 32 a is shaped such that the external light LO reaching from the second reflecting mirror 40 is reflected in a direction different from that of the second reflecting mirror 40. Specifically, it is shaped such that all of the normal N (one normal N is shown as an example in FIG. 3) in the curved portion 32 a are apart from the side end face of the second reflecting mirror 40 by a predetermined distance (for example, 5 mm) or more. As a result, all of the normal N on the emission surface 32 of the transmission-type screen 30 including the portions other than the curved portion 32 a do not intersect with the second reflecting mirror 40. For example, it is conceivable to design the curved surface shape such that all of the normal N in the curved portion 32 a passes through a point P having a distance d of 5 mm from the side end surface of the second reflecting mirror 40. According to this criterion, the curved surface shape of the curved portion 32 a may be a free curved surface, a quadratic curve shape such as a parabola, an ellipse or a hyperbola as viewed from the side. The curved portion 32 a of the transmission-type screen 30 and other planar portion (a portion inclined to the minimum distortion angle) are connected by tangent line continuation. Since distortion occurs in the virtual image V by the curved portion 32 a, it is desirable to minimize the inclination of the curved portion 32 a. Further, by forming the entire emission surface 32 of the transmission-type screen 30 into a concave curved surface, the curved portion 32 a may be provided on the front-end side. In this case, as an emission surface 32, a concave curved surface may be formed by moving an original curve in a direction orthogonal to a normal direction of the curve based on a quadratic curve, a cubic curve, or a free curve, or a free-form surface may be formed. FIG. 4 shows a modified example in which the entire transmission-type screen 30 is formed to have an elliptical concave curved surface when viewed from the side. Whichever case the shape of the transmission-type screen 30 is, it is preferable to compare the shapes by optical simulation and select the shape with the least distortion of the virtual image V.

Further, it is desirable to use a flexible material such as the aforementioned transparent resin material in a base of the transmission-type screen 30 to provide the curved portion 32 a. In this case, a fixing portion (not shown) provided in the housing 70 for fixing the transmission-type screen 30 is formed in a concave curved shape for curving the transmission-type screen 30 into an arbitrary shape, whereby the curved portion 32 a can be easily provided by fixing the transmission-type screen 30 to the fixing portion. In addition, the curved portion 32 a may be formed by curving at least a part of the transmission-type screen 30 by molding such as thermal processing using a hard-transparent material such as inorganic glass as a base material.

Further, the emission surface 32 of the transmission-type screen 30 is preferably a smooth surface. In the case where one surface of the transmission-type screen 30 is made rough by surface processing to obtain a diffusion effect, the rough surface serves as the light receiving surface 31 and the smooth surface as the emission surface 32. If the emission surface 32 is a rough, the external light LO reflected on the emission surface 32 is diffused and the distortion of the virtual image V is increased because of occurrence of the need to increase the inclination angle of the transmission-type screen 30 or to increase the inclination angle of the curved portion 32 a not to direct the light to the second reflecting mirror 40.

In a display image G displayed on the transmission-type screen 30 by projecting the display light L from the projector 10, distortion occurs in the curved portion 32 a of the transmission-type screen 30 as shown by the hatched portion in FIG. 5 (a). On the other hand, the display image displayed by the projector 10 can be corrected by warping which previously distorts the display image in an opposite direction by the amount distorted by the curved portion 32 a. FIG. 5 (b) shows the display image G, corrected by the warping. As described above, since the warping is a method of correcting the distortion of an image viewed from a specific viewpoint, when a driver's viewpoint moves, the display image G (the virtual image V) returns to the state where the distortion by the curved portion 32 a is not corrected, but since the distortion only in the hatched portion, that is, in a portion of the display image G is changed, correction by the warping acts relatively effectively.

The HUD device 1 of the present embodiment is a head-up display device comprises a projector 10 for emitting display light L that indicates a display image, a transmission-type screen 30 including a light receiving surface 31 for receiving the display light L and an emission surface 32 for emitting the display light L, and a second reflecting mirror 40 for reflecting the display light L from the transmission-type screen 30, wherein the transmission-type screen 30 includes a concave curved portion 32 a on one end side of the emission surface 32, and the curved portion 32 a reflects external light LO reaching from the second reflecting mirror 40 in a direction different from that of the second reflecting mirror 40.

According to this, there is no need to incline the transmission-type screen 30 largely with respect to an optical axis AX of the display light L, and it is possible to reduce distortion of a virtual image V and to prevent degradation of visibility due to the reflected external light LO from the transmission-type screen 30.

Further, in the HUD device 1, the transmission-type screen 30 is disposed to be inclined by a predetermined angle α with respect to the optical axis AX of the display light L.

According to this, it is possible to minimize the distortion of the virtual image V by inclining the transmission-type screen 30 to an optically ideal angle.

Further, in the HUD device 1, the emission surface 32 of the transmission-type screen 30 is a smooth surface.

According to this, the reflected external light LO of the transmission-type screen 30 does not diffuse, and it is possible to suppress the distortion of the virtual image V by reducing the inclination angle of the curved portion 32 a and the inclination angle of the entire transmission-type screen 30.

It should be noted that the present invention is not limited to the above-described embodiments. In the present embodiment, although the transmission-type screen 30 is disposed sideways and the curved portion 32 a is provided on the front-end side of the emission surface 32, one end forming a curved portion is determined by the arrangement of the transmission-type screen and positional relationship with the reflecting mirror, and is not limited to this embodiment. For example, when the transmission-type screen 30 is arranged in a vertical direction, the curved portion is formed on an upper-end side. Further, in the present embodiment, the second reflecting mirror 40 is provided as a reflecting mirror for reflecting the display light L from the transmission-type screen 30, but the reflecting mirror is not limited thereto. For example, in a configuration without the second reflecting mirror 40, the concave mirror 50 serves as a reflecting mirror that reflects the display light L from the transmission-type screen 30.

### INDUSTRIAL APPLICABILITY

The present invention is suitable for a head-up display device using a transmission-type screen.

### DESCRIPTION OF REFERENCE NUMERALS

- 1: Head-up display device
- 10: Projector (Display light emitting part)
- 20: First reflecting mirror
- 30: Transmission-type screen
- 31: Light receiving surface
- 32: Emission surface
- 32 a: Curved portion
- 40: Second reflecting mirror (reflector)
- 50: Concave mirror
- G: Display image
- L: Display light
- V: Virtual image

## Claims

1. A head-up display device, comprising:
a display light emitting part (10) for emitting display light (L) that shows a display image (G);
a transmission-type screen (30), including a light receiving surface (31) that receives the display light (L) and an emission surface (32) that emits the display light (L); and
a reflecting mirror (40) that reflects the display light (L) from the transmission-type screen (30),
**characterised in that** the transmission-type screen (30) includes a concave curved portion (32a) on one end side of the emission surface (32), and the curved portion (32a) reflects external light (LO) reaching from the reflecting mirror (40) in a direction different from that of the reflecting mirror (40).

2. The head-up display device according to claim 1, wherein the transmission-type screen (30) is inclined by a predetermined angle (α) with respect to an optical axis (AX) of the display light (L).

3. The head-up display device according to claim 1, wherein the emission surface (32) of the transmission-type screen (30) is a smooth surface.

## Patentansprüche

1. Head-up-Displayeinrichtung, umfassend:
einen Displaylicht-emittierenden Teil (10) zum Emittieren von Displaylicht (L), das ein Displaybild (G) zeigt;
einen Schirm (30) vom Transmissionstyp einschließlich einer lichtaufnehmenden Oberfläche (31), die das Displaylicht (L) aufnimmt, und eine Emissionsoberfläche (32), die das Displaylicht (L) emittiert; und
einen reflektierenden Spiegel (40), der das Displaylicht (L) von dem Schirm (30) vom Transmissionstyp reflektiert,
**dadurch gekennzeichnet, dass** der Schirm (30) vom Transmissionstyp einen konkaven gekrümmten Abschnitt (32a) auf einer Endseite der Emissionsoberfläche (32) enthält und der gekrümmte Abschnitt (32a) externes Licht (LO) reflektiert, das von dem reflektierenden Spiegel (40) in eine andere Richtung als die des reflektierenden Spiegels (40) reicht.

2. Head-up-Displayeinrichtung nach Anspruch 1, wobei der Schirm (30) vom Transmissionstyp um einen vorbestimmten Winkel (α) bezüglich einer optischen Achse (AX) des Displaylichts (L) geneigt ist.

3. Head-up-Displayeinrichtung nach Anspruch 1, wobei die Emissionsoberfläche (32) des Schirms (30) vom Transmissionstyp eine glatte Oberfläche ist.

## Revendications

1. Dispositif d'affichage tête haute, comprenant :
une partie émettrice de lumière d'affichage (10) pour émettre une lumière d'affichage (L) qui affiche une image d'affichage (G) ;
un écran de type transmission (30), comprenant une surface de réception de la lumière (31) qui reçoit la lumière d'affichage (L) et une surface d'émission (32) qui émet la lumière d'affichage (L) ; et
un miroir réfléchissant (40) qui réfléchit la lumière d'affichage (L) de l'écran de type transmission (30),
**caractérisé en ce que** l'écran de type transmission (30) comprend une partie incurvée concave (32a) sur un côté d'extrémité de la surface d'émission (32), et la partie incurvée (32a) réfléchit la lumière externe (LO) provenant du miroir réfléchissant (40) dans une direction différente de celle du miroir réfléchissant (40).

2. Dispositif d'affichage tête haute selon la revendication 1, l'écran de type transmission (30) étant incliné d'un angle prédéterminé (α) par rapport à un axe optique (AX) de la lumière d'affichage (L).

3. Dispositif d'affichage tête haute selon la revendication 1, la surface d'émission (32) de l'écran de type transmission (30) étant une surface lisse.
